(19) Europäisches Patentamt
European Patent Office
Office européen des brevets

(11) Numéro de publication: **0 186 547 B1**

(12) **FASCICULE DE BREVET EUROPEEN**

(45) Date de publication du fascicule du brevet: **18.01.89**

(51) Int. Cl.⁴: **B 32 B 27/36**, B 32 B 27/42, B 32 B 27/12

(21) Numéro de dépôt: **85402289.4**

(22) Date de dépôt: **25.11.85**

(54) **Matériaux stratifiés à base de résine phénolique et procédé pour leur préparation.**

(30) Priorité: **27.11.84 FR 8418023**

(43) Date de publication de la demande: **02.07.86 Bulletin 86/27**

(45) Mention de la délivrance du brevet: **18.01.89 Bulletin 89/3**

(84) Etats contractants désignés: **BE DE GB IT LU NL**

(56) Documents cités: **FR-A-1 325 708**

(73) Titulaire: **EVERITE S.A., "Les Miroirs" 18 avenue d'Alsace, F-92400 Courbevoie (Hauts-de-Seine) (FR)**

(72) Inventeur: **Le Gac, François, 11 Rue du Clos Bouquet, F-77310 Boissise-le Roi (FR)**
Inventeur: **Chevalier, Pierre, 26 Rue de la Maigrette 86 Buxeuil, F-37160 Descartes (FR)**

(74) Mandataire: **Muller, René et al, SAINT-GOBAIN RECHERCHE 39, quai Lucien Lefranc, F-93304 Aubervilliers (FR)**

**EP 0 186 547 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne des matériaux stratifiés à base de résine phénolique armée d'un renfort.

Les matériaux stratifiés sont des matériaux comportant en alternance plusieurs couches ou strates successives de résine thermodurcissable renforcée ou non.

De tels matériaux peuvent trouver diverses applications, notamment dans le bâtiment, comme éléments de bardage, en remplacement de tôles métalliques sensibles à l'oxydation.

On sait préparer des matériaux stratifiés à base de résine phénolique renforcée. La résine phénolique la plus généralement utilisée est un résol, c'est-à-dire une résine thermodurcissable obtenue par condensation, en milieu basique, de phénol et de formaldéhyde, avec un excès de formaldéhyde. Le durcissement de la résine ainsi préparée, c'est-à-dire sa réticulation en réseau tridimensionnel, s'effectue par polycondensation à l'aide d'un catalyseur acide comme par exemple l'acide chlorhydrique, sulfurique, phosphorique, oxalique, ou un acide arène-sulfonique tel que l'acide benzènesulfonique, phénolsulfonique, etc....

On utilise généralement un renfort à l'état de fibres telles que des fibres cellulosiques ou des fibres de verre, à l'état de non-tissé, par exemple un renfort en polyester à haut poids moléculaire, ou en chlorure de polyvinyle, ou encore à l'état de mat de verre ou de tissu, par exemple un renfort en polyamide aromatique, en verre ou en amiante.

Les matériaux stratifiés à base de résine phénolique sont particulièrement recherchés pour leur excellente tenue au feu. Mais il convient également qu'ils présentent des propriétés de surface convenable, à savoir un aspect lisse et homogène qui ne s'altère pas avec le temps.

Or, les propriétés d'aspect des matériaux stratifiés en général, et des matériaux stratifiés à base de résine phénolique renforcée en particulier, sont étroitement liées au procédé de préparation.

Le brevet français 1 325 708 décrit la fabrication, par pressage à chaud, de panneaux stratifiés constitués de papiers imprégnés de résine synthétique et d'une couche de revêtement formée de résine de polyester non saturé copolymérisé avec un monomère vinylique. On obtient une surface non poreuse et très brillante.

On connaît aussi différents procédés pour la préparation de matériaux stratifiés à base de résine phénolique renforcée, mais jusqu'à présent les surfaces des matériaux préparés ne présentent pas l'aspect lisse et homogène désiré.

Selon un procédé, on imprègne de résine un renfort sous forme de tissu ou de non-tissé, on parfait l'imprégnation soit au rouleau, soit à la presse, et on réunit plusieurs couches de renfort imprégné. Suivant une variante de ce procédé, on prépare le matériau stratifié par enroulement d'un filament imprégné de résine.

Selon un autre procédé, on projette un renfort sous forme de fibres sur une couche de résine déposée sur la surface d'un moule, et on poursuit le dépôt de résine et de fibres autant de fois que nécessaire pour obtenir l'épaisseur désirée.

On a constaté que la surface des matériaux obtenus selon ces procédés n'est pas lisse: des micropiqûres de forment et les fibres marquent la surface en laissant apparaître leur empreinte en saillie. En outre, les phénomènes s'aggravent au cours du vieillissement sous l'action de l'érosion, de la chaleur et de la lumière: la teinte du matériau évolue vers le brun sombre et l'on observe des microcraquelures, du faïençage et un déchaussement des fibres au bout de quelques mois. Si on essaie de masquer ces défauts de surface en appliquant directement sur la matériau stratifié un revêtement , par exemple une peinture à base de liant polyuréthane, de façon à constituer une couche de finition, l'aspect de surface du matériau obtenue reste mauvais. On ne peut obtenir une surface lisse qu'en appliquant sur le matériau stratifié un produit bouche-pores, par exemple une résine de polyuréthane, et en ponçant la surface obtenue avant de la peindre, ce qui constitue des opérations longues à mettre en œuvre.

Selon un autre procédé, on produit des articles moulés en résine phénolique en déposant ou projetant sur la surface d'un moule une couche d'une composition à base d'une résine synthétique que l'on fait durcir au moins partiellement avant d'y déposer selon l'un des procédés précédemment décrits une ou plusieurs couches de résine renforcée. Cette couche déposée sur le moule est couramment appelée gel-coat. Suivant une variante de cette technique dite du «gel-coat», le gel-coat est déposé ou projeté sur une pellicule cellulosique ou en polyester thermoplastique défilant en continu, et la résine renforcée est déposée dessus et recouverte, avant qu'elle n'ait durci, d'une autre pellicule cellulosique ou autre, elle-même également recouverte d'un gel-coat, le produit stratifié étant mis en forme en continu pendant son durcissement. Ce procédé est particulièrement adapté pour la préparation de matériaux stratifiés minces, d'une épaisseur de l'ordre du millimètre.

La technique du gel-coat a été essentiellement développée pour la préparation de matériaux stratifiés à base de résine polyester renforcée, pour lesquels le gel-coat est lui-même un revêtement à base de résine polyester, et les résultats obtenus sont satisfaisants.

On a alors essayé d'appliquer cette technique à la préparation de matériaux stratifiés à base de résine phénolique renforcée, en utilisant comme gel-coat un revêtement à base de résine phénolique. Mais on a constaté que les mêmes phénomènes indésirables que ceux décrits en relation avec les procédés précédents apparaissent: avec un gel-coat relativement mince, la surface du matériau présente des micropiqûres et l'empreinte des fibres. On peut faire disparaître les micropiqûres et l'empreinte des fibres en déposant un gel-coat à base de résine phénolique sous forme d'un revêtement plus épais, mais on observe alors l'apparition de microcraquelures et de faïençage.

On a alors cherché à appliquer aux stratifiés phénoliques les gel-coat à base de résine polyester insaturé utilisés pour les stratifiés à base de résine polyester renforcée, pour mettre à profit la bonne tenue au

vieillissement des résines polyester durcies. Mais les formulations habituelles des gel-coat à base de résine de polyester insaturée ne sont pas compatibles avec les résines phénoliques.

Pour rendre les deux résines compatibles, il a été proposé, par exemple dans la publication de brevet française nr. 2 331 587, d'intercaler entre un gel-coat en résine de polyester et la résine phénolique un saupoudrage de dérivés borés. Mais, d'une part, l'adhérence n'est pas entièrement satisfaisante, et d'autre part, la réalisation d'un saupoudrage fin et régulier est une opération délicate.

Il a également été proposé, dans la publication de brevet française nr. 2 447 275, d'utilisér un gel-coat à base de résine furanique. Mais un tel gel-coat se désagrège au cours du temps, et de ce fait un revêtement supplémentaire par peinture est nécessaire.

On a également proposé d'interposer un gel-coat à base de résine furanique entre un gel-coat à base de résine polyester, faisant office de couche d'spect, ou de finition, et la résine phénolique. Mais le furfural, à partir duquel on forme la résine furanique, a tendance à migrer dans la couche externe à base de résine polyester. Ce phénomène assure l'adhérence souhaitée entre les résines, mais oblige à déposer toujours deux couches supplémentaires sur le stratifié phénolique.

La présente invention a pour objet de fournir des matériaux stratifiés à base de résine phénolique réticulable par catalyse acide armée d'un renfort, comprenant au moins deux faces et comportant sur au moins une de leurs faces au moins une strate supplémentaire, à base de résine non phénolique, et qui ne présentent aucun des inconvénients précédemment mentionnés.

Plus particulièrement, l'invention se propose de fournir un tel matériau stratifié pour lequel la ou les strates supplémentaires peuvent avoir une épaisseur aussi faible que de l'ordre du 1/10ème de millimètre, et qui conserve cependant les propriétés désirées, c'est-à-dire une bonne tenue au feu (classement M1 à l'épiradiateur), une bonne tenue au vieillissement, une bonne dureté superficielle, et une surface lisse.

Le matériau stratifié selon l'invention à base de résine phénolique réticulable par catalyse acide armée d'un renfort, comprend au moins deux faces, et sur au moins une de ses faces, au moins une strate supplémentaire à base de résine non phénolique. Il est caractérisé en ce que la strate supplémentaire en contact avec la résine phénolique est obtenue à partir d'une formulation comprenant une résine de polyester à insaturation éthylénique, un solvant de ladite résine, éventuellement un ou plusieurs autres adjuvants, un au moins des composants de la formulation comportant des sites hydrophiles en nombre au moins égal au nombre de sites d'insaturation éthylénique du prépolymère de la résine de polyester.

Les sites hydrophiles de la formulation destinée à former une strate du matériau stratifié directement en contact avec la résine phénolique, peuvent provenir de diverses sources. Ils peuvent par exemple provenir de la chaîne polymérique de la résine polyester, c'est-à-dire du produit de la réaction de condensation d'un diacide et d'un diol conduisant à l'obtention d'un prépolymère de polyester.

Les sites hydrophiles peuvent égalemenr provenir d'un solvant de réticulation de la résine. Les résines polyester sont usuellement en solution dans le styrène. Avantageusement, on remplace au moins partiellement selon l'invention le styrène par le méthacrylate de méthyle par exemple.

On a toutefois constaté que pour faciliter la fabrication du stratifié selon la technique du gel-coat, il était avantageux d'utiliser une formulation dans laquelle les sites hydrophiles provenaient de la chaîne polymérique elle-même.

Comme cela a été précédemment indiqué, les résines polyester sont obtenues par condensation d'un polyol et d'un diacide. Les sites hydrophiles peuvent être portés par la chaîne principale ou une chaîne latérale de l'un au moins des composants, polyol ou diacide, produits de départ dans l'obtention de la résine, toujours en combinaison avec la fait que le nombre de sites hydrophiles soit suffisant, c'est-à-dire au moins aussi important que le nombre de sites d'insaturation éthylénique du prépolymère, c'est-à-dire de la résine non réticulé.

Parmi toutes les résines polyesters insaturés ainsi définies, on peut par exemple citer les polyesters obtenus à partir de bisphénol A et d'acide acrylique, de formule générale (1):

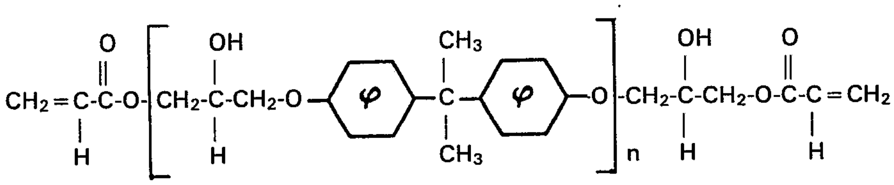

avec n = 1 ou n = 2, c'est-à-dire une résine vinylester.

On choisira avantageusement dans tous les cas des groupements hydroxyles ou carboxyles, qui confèrent à la solution de résine une teinte transparente. Par addition de colorants convenables, il est alors facile d'obtenir une formulation colorée à volonté et donc de donner au matériau stratifié la couleur désirée. Pour cette aspect de l'invention, on obtient des matériau stratifiés dont les faces visibles peuvent présenter toutes les teintes souhaitées.

Sans quitter le cadre de l'invention, on peut ajouter à la résine polyester, avant durcissement, différents adjuvants: charge minérale, agent d'étalement, solvants, agent thixotrope, pigments, accélérateurs.

Pour que le matériau stratifié selon l'invention résiste encore mieux au vieillissement, on peut avantageusement préparer un matériau stratifié qui comporte, en surface, une strate de finition supplémentaire composée d'un gel-coat à base d'une résine qui garantit un aspect esthétique encore meilleur au matériau stratifié. Une telle résine peut être par

exemple une résine de polyester insaturé de formulation usuelle, par exemple une résine à base d'éthylèneglycol et d'acide iso ou orthophthalique, ou encore une résine à base de bisphénol A et d'acide fumarique, réticulées au styrène. Ce peut être aussi une réssine du type polyuréthane.

Ainsi, sous un autre de ses aspects, l'invention propose un matériau stratifié à base de résine phénolique réticulable par catalyse acide armée d'un renfort, qui comporte, sur au moins une de ses faces, une couche d'une composition comprenant une résine polyester en solution, telle que décrite précédemment, et une couches de finition à base d'une résine autre, non compatible avec les résines phénoliques.

On entend par couche de finition au sens de l'invention, une couche ou strate qui constitue la strate visible du matériau sur l'une ou l'autre de ses faces. Suivant les variantes de l'invention, la strate de finition est donc soit une strate obtenue à partir d'une formulation comprenant une résine de polyester en solution et comprenant des sites hydrophiles, soit une strate obtenue à partir d'une formulation comprenant une résine non compatible avec les résines phénoliques.

L'invention concerne également un procédé de préparation de matériaux stratifiés à base de résine phénolique tels que définis précédemment.

On procède selon l'invention, selon la technique du gel-coat, c'est-à-dire qu'on applique sur une ou des faces d'un moule, une formulation telle que définie précédemment, et on dépose ensuite des couches alternées successives de résine phénolique et de renfort.

Le moule peut être avantageusement remplacé par un simple film support, telle une pellicule cellulosique ou du polyéthylèneterephthalate défilant en continu. Il faut alors en fin d'opération, défilmer la matériau stratifié. On entend, au sens de l'invention, par défilmer, retirer le film support, ou encore séparer le matériau stratifié du film support. Ce procédé permet de préparer en continu des stratifiés de faible épaisseur.

La stratification de résune phénolique et de renfort est obtenue, de façon connue, par contact à froid ou à la presse à chaud, ou par injection, ou encore par enroulement filamentaire.

Le procédé de préparation de matériaux stratifiés à base de résine phénolique armée d'un renfort consiste, dans sa forme préférée, à appliquer sur un film support défilant en continue de façon à former une couche, une formulation comprenant une résine de polyester insaturée telle que définie précédemment, c'est-à-dire comportant des sites hydrophiles en nombre au moins aussi important que celui des sites insaturée de la chaîne polymérique de la résine, puis, après durcissement au moins partiel, à former sur ladite couche une stratification de résine phénolique et de renfort, et, après durcissement en étuve, à défilmer le matériau stratifié obtenu.

Selon ce mode de préparation préféré, la formulation est appliquée manuellement ou à l'aide d'un pistolet sur le support ou dans le cas d'une préparation par moulage, à la râcle, de façon à former une couche d'épaisseur désirée, pouvant être aussi faible que un dixième de millimètre environ.

Dans le cas où on prépare un matériau stratifié dans lequel la couche extérieure visible est non pas la couche de résine polyester insaturé définie selon l'invention, mais une couche assurant de façon connue une fonction esthétique, mais non compatible avec les résines phénoliques, comme des résines polyester de formulation usuelle, ou encore des résines de polyuréthane, on procède de la façon suivante: on dépose sur un film support ou en forme sur un moule une première couche de résine polyester thermodurcissable de formlulation usuelle, convenablement chargée et/ou pigmentée, mélangée à un catalyseur de durcissement, et on laisse cette première couche durcir au moins partiellement. On dépose ensuite, comme indiqué ci-dessus, une seconde couche, à base de résine polyester telle que définie selon l'invention, on laisse durcir au moins partiellement, puis on forme sur ladite seconde couche une stratification à l'aide phénolique et de renfort, on laisse durcir la résine phénolique et on défilme le matériau stratifié obtenu.

De préférence, le durcissement de la résine phénolique se fait aux environs de 95°C.

Pour encore mieux mettre en évidence les avantages de l'invention, on a établi une comparaison entre les propriétés de stratifiés selon l'invention et de stratifiés dans lesquels le revêtement formé directement sur le stratifié phénolique selon la technique du gel-coat, est à base d'une résine polyester obtenue à partir de bisphénol A et d'acide fumarique, ou encore à base d'une résine polyuréthane.

La description qui va suivre d'exemples de mise en œuvre de l'invention a pour simple but de l'illustrer, et ne limite en rien sa portée.

La comparaison des exemples (exemples 1 à 5) selon l'invention et des exemples hors du cadre de l'invention (exemples 6 à 8) se fera en comparant les propriétés respectives d'adhérence de revêtement en contact avec le stratifié phénolique, qui traduisent la compatibilité entre ledit revêtement et la résine phénolique contenue dans le stratifié, et de vieillissement des stratifiés obtenus.

Les exemples 1 à 5 sont des exemples conformes à l'invention qui mettent en évidence les propriétés d'adhérence des couches de finition au stratifié phénolique en comparaison avec les exemples 6 à 8 qui sont hors du cadre de l'invention.

On indique dans les exemples la composition des formulations employées. Certains constituants des formulations ne seront pas détaillés dans la description car l'homme de l'art sait bien les adapter à chaque formulation. Ce sont notamment les agents de formation du film, les agents ignifugeants, les accélérateurs. On indiquera uniquement leur pourcentage en poids par rapport au poids total de la formulation.

*Exemple 1*

On prépare un matériau stratifié selon l'invention, de la façon suivante: on applique sur un film support constitué d'une pellicule cellulosique et porté à une température de 60°C, une formulation destinée à constituer une couche de finition du matériau stratifié. La formulation est appliquée sur une épaisseur de 0,08 mm environ et elle comprend les constituants

suivants, exprimés en pourcentages en poids par rapport au poids total de la formulation:

| | |
|---|---|
| — résine vinylester, commercialisée par la société SHEBY: | 81,87% |
| — pâte colorée, contenant des pigments empâtés dans une résine polyester de phtalate de butyle: | 12,45% |
| — accélérateurs: | 1,60% |
| — agents de formation du film: | 2,30% |
| — catalyseurs: | 1,78% |

On fait durcir partiellement la couche pendant 1 minute à 70°C, puis on forme sur cette couche partiellement durcie, par contact, le stratifié phénolique, en déposant fibres de verre et résine phénolique. On chauffe légèrement pour immprégner convenablement les fibres de verre. Les fibres de verre utilisées sont des fibres de 50 mm de long, dosées à environ 600 g/$m^2$ telles que les fibres commercialisées par la société VETROTEX sous l'appellation «Roving P 223»®. La résine phénolique est une résine mélangée à son catalyseur acide de réticulation et commercialisée par la société SHEBY sous la marque «Uralam»® .

Après formation du stratifié, et alors qu'il n'est encore que partiellement durci, il est recouvert d'un second film support cellulosique sur lequel a également été appliquée une formulation identique à la première pour former une seconde couche de finition. Cette formulation est mise en contact avec la résine phénolique du stratifié, alors que la résine phénolique et la formulation elle-même ne sont que partiellement durcies.

L'ensemble est ensuite calandré à une épaisseur de 1,45 mm, puis durci en étuve, pendant le temps nécessaire à 95°C. Pour obtenir un stratifié prêt à l'emploi, il faut ensuite le défilmer pour le séparer des films supports. Le défilmage est effectué alors que le stratifié se trouve à une température de 60°C environ.

Avec les gel-coat décrits dans l'exemple, c'est-à-dire à base essentiellement d'une résine vinylester, le défilmage est facile à chaud, quelles que soient les conditions de formation: le gel-coat reste adhérent au stratifié.

Par ailleurs, on a procédé à des essais d'exposition en extérieur, pour étudier l'évolution du stratifié en vue d'une utilisation dans le bâtiment. La surface de l'échantillon exposé devient mate au bout d'un an, mais après 3 ans d'exposition, in n'y a plus aucune évolution notable de la couleur. L'important est le maintien de la couleur.

*Exemple 2*

On prépare, selon le même procédé que celui décrit en relation avec l'exemple 1, un stratifié comprenant une superposition différente de strates.

Un premier gel-coat est déposé sur le film support, avec une épaisseur de 0,08 mm, sa composition étant la suivante:

| | |
|---|---|
| — résine polyester isophtalique: | 79,5 % |
| — pigments: | 17,77% |
| — agents de formation du film: | 0,88% |
| — catalyseurs: | 1,78% |
| — accélérateurs: | 0,07% |

On fait durcir partiellement cette première couche, puis on applique un deuxième gel-coat, avec une épaisseur de 0,05 mm, sa composition étant la suivante:

| | |
|---|---|
| — résine vinylester: | 94,32% |
| — agents de formation du film: | 2,24% |
| — catalyseurs: | 1,90% |
| — accélérateurs: | 1,52% |

On fait durcir partiellement cette deuxième couche, puis on forme le stratifié phénolique proprement dit en alternant couches de fibres de verre et de résine phénolique et on achève la stratification par le dépôt d'un deuxième film support, sur lequel on a également déposée un double gel-coat. Le stratifié ainsi formé est ensuite calandré à 1,45 mm d'épaisseur, puis durci en étuve, à 95°C.

Le défilmage à chaud se produit sans aucun inconvénient.

Après 3 ans d'exposition extérieure, la surface du matériau est encore brillante, et aucune évolution notable de la teinte ne s'est manifesté.

*Exemple 3*

On procède de la même façon que dans l'exemple précédent, mais en modifiant la formulation du premier gel-coat déposé faisant office de couche de finition. Sa composition est la suivante:

| | |
|---|---|
| — résine de polyuréthane (produit commercialisé par la société SORITEC sous la définition D 146): | 75,8% |
| — catalyseurs: | 22,7% |
| — accélérateurs: | 1,5% |

Il est déposé avec une épaisseur de 0,04 à 0,05 mm. On le laisse durcir environ 2 minutes avant d'appliquer le second gel-coat, de composition identique à celle indiquée en relation avec l'exemple 2, sur une épaisseur de 0,05 mm. On forme la stratification phénolique, on forme deux couches identiques sur l'autre face et on calandre à 1,45 mm d'épaisseur. On défilme le stratifié à chaud sans qu'apparaisse aucun signe de décollement de la surface.

Après 3 ans d'exposition extérieure, la surface du matériau est encore brillante et aucune évolution notable de la teinte ne s'est manifestée. On améliore donc encore la résistence au vieillissement en formant un deuxième gel-coat.

*Exemple 4*

On procède comme dans l'exemple précédent avec un double gel-coat, sur chacune des deux surfaces d'un stratifié phénolique. Le gel-coat qui constitue la couche la plus extérieure du stratifié, c'est-à-dire la couche de finition, est obtenu à partir de la formulation suivante:

— résine polyester isophtalique: 52,85%
— résine polyester commercialisé sous la désignation 51122 par la société RHONE POULENC: 26,65%
— pigments: 17,77%
— agents de formation de film: 0,88%
— catalyseurs: 1,78%
— accélérateurs: 0,07%

Le gel-coat qui est en contact d'une part avec la stratification phénolique, et d'autre part avec la couche extérieure de finition, est obténu à partir de la formulation suivante:

— résine vinylester: 81,65%
— agents de formation de film: 0,78%
— agents ignifugeants: 15,56%
— catalyeurs: 1,56%
— accélérateurs: 0,56%

Grâce à une telle formulation, qui comprend une certaine quantité d'agents ignifugeants, on obtient des stratifiés qui présentent une meilleure résistance au feu, correspondant au classement M1 à l'épiradiateur.

*Exemple 5*

Dans cet exemple, on a utilisé une formulation de gel-coat dans laquelle les groupements hydrophiles sont représentés non plus par la résine polyester, composant essentiel de la formulation, mais par un solvant supplémentaire, le méthacrylate de méthyle, qui apporte des groupements carboxyles. La composition de la formulation est la suivante:

— résine polyester isophtalique à 40% de styrène: 14,33%
— résine polyester orthophtalique à 28% de styrène et 12% de méthacrylate de méthyle: 65,77%
— méthacrylate de méthyle: 14,30%
— agents de formation du film: 2,83%
— catalyseurs: 2,62%
— accélérateurs: 0,15%

Le gel-coat est déposé sur une épaisseur de 0,08 mm sur les deux faces du stratifié d'une épaisseur totale de 1,45 mm.

Pour obtenir un défilmage satisfaisant, et donc une bonne adhérence du gel-coat au stratifié, il est nécessaire de choisir avec soin la durée de durcissement du gel-coat avant la formation du stratifié phénolique. Lorsque le durcissement est trop important, le gel-coat est arraché localement lors du défilmage à chaud, dès la sortie de la machine.

Cet exemple montre qu'il est plus difficile d'obtenir des résultats satisfaisant, lorsque les groupements hydrophiles sont fournis par un solvant de réticulation que lorsqu'ils sont fournis par la résine de polyester elle-même. Mais en opérant dans des conditions plus précises, on parvient néanmoins au résultat désiré, à savoir une compatibilité entre gel-coat et résine ainsi des bonnes qualités de surface.

Les exemples suivants sont hors du cadre de l'invention et sont décrits à titre d'exemples comparatifs.

*Exemple 6*

Toujours selon le même procédé, on forme un stratifié phénolique pourvu d'un seul gel-coat, sur chacune de ses faces, axant une épaisseur de 0,08 mm et la composition suivante:

— polyester isophtalique: 79,5 %
— pigments: 17,77%
— agents de formation du film: 0,88%
— catalyseurs: 1,78%
— accélérateurs: 0,07%

La stratification terminée, le matériau stratifié obtenu est calandré à l'épaisseur désirée de 1,45 mm avant d'être durci en étuve à 95°C.

Le défilmage d'un tel stratifié n'est pas concluant: le gel-coat tend à rester sur le film cellulosique lors du défilmage à chaud, et même lors d'un défilmage après refroidissement, si le stratifié phénolique est déposé sur le gel-coat déjà durci.

Cet exemple montre l'importance de la nature du gel-coat sur sa compatibilité avec le stratifié phénolique.

*Exemple 7*

On utilise le même type de formulation de gel-coat que dans l'exemple précédent, mais en y incorporant des agents ignifugeants, afin d'augmenter les propriétés de résistance au feu du matériau obtenu. La formulation appliquée est la suivante:

— résine polyester: 72,95%
— pigments: 15,31%
— agents de formation du film: 0,86%
— agents ignifugeants: 8,11%
— catalyseurs: 2,7 %
— accélérateurs: 0,07%

Lors du défilmage à chaud, on observe des décollements localisés, qui traduisent les difficultés d'adhérence du gel-coat au stratifié. Lorsqu'on défilme à froid, le gel-coat semble adhérer un certain temps, mais des essais de séjour dans l'eau bouillante ont montré qu'après 3 heures de séjour, il se produit un faïençage du gel-coat, ce qui le rend inapte à l'utilisation souhaitée.

Cet exemple montre que l'incorporation d'agents ignifugeants, n'influe pas sur la compatibilité entre gel-coat et résine phénolique dans un sens souhaité de renforcement de ladite compatibilité.

*Exemple 8*

Dans cet exemple, le gel-coat que l'on forme est obtenu à partir d'une formulation essentiellement à base d'une résine polyuréthane telle que celle indiquée en relation avec l'exemple 3. La composition est la suivante:

— résine polyuréthane: 75,8%
— catalyseurs: 22,7%
— accélérateurs: 1,5%

Les résultats obtenus dans ce cas sont très mauvais: même en attendant plusieurs minutes après le dépôt du gel-coat pour la formation du stratifié phénolique, il se forme une mousse à l'interface gel-coat - stratifié, ce qui entraîne une adhérence tout à fait insuffisante.

**Revendications**

1. Matériau stratifié à base de résine phénolique réticulable par catalyse acide armée d'un renfort, comprenant au moins deux faces, et comprenant sur au moins une de ses faces, au moins une strate supplémentaire à base de résine non phénolique, caractérisé en ce que la strate supplémentaire en contact avec la résine phénolique est obtenue à partir d'une formulation comprenant une résine de polyester à insaturation éthylénique, un solvant de ladite résine, éventuellement un ou plusieurs autres adjuvants, un au moins des composants de la formulation comportant des sites hydrophiles en nombre au moins égal au nombre de sites d'insaturation éthylénique du prépolymère de la résine de polyester.

2. Matériau stratifié selon la revendication 1, caractérisé en ce que les sites hydrophiles de la formulation comprenant une résine polyester sont des groupes hydroxyle ou carboxyle.

3. Matériau stratifié selon la revendication 1 ou 2, caractérisé en ce que les sites hydrophiles de la formulation comprenant une résine polyester proviennent de la résine polyester elle-même qui est alors un prépolymère de polyester.

4. Matériau stratifié selon l'une des revendications 1 à 3, caractérisé en ce que les sites hydrophiles de la formulation comprenant une résine polyester proviennent d'un solvant de la résine polyester.

5. Matériau stratifié selon la revendication 4, caractérisé en ce que ledit solvant de la résine polyester est le méthacrylate de méthyle.

6. Matériau stratifié selon la revendication 3, caractérisé en ce que les sites hydrophiles sont portés par la chaîne principale d'un au moins des réactifs, polyol ou diacide, intervenant pour la formation de la résine polyester.

7. Matériau stratifié selon la revendication 3, caractérisé en ce que les sites hydrophiles sont portés par une chaîne latérale d'un au moins des réactifs, polyol ou diacide, intervenant pour la formation de la résine polyester.

8. Matériau stratifié selon la revendication 6, caractérisé en ce que la résine polyester est une résine de vinylester de formule (1)

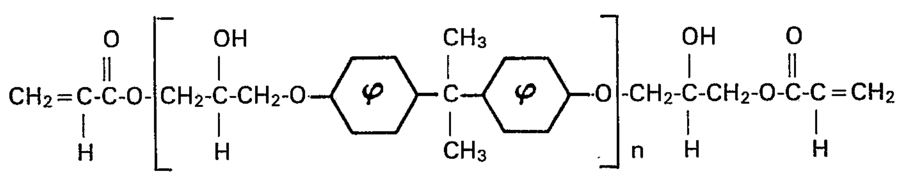 avec n = 1 ou 2.

9. Matériau stratifié selon l'une des revendications 1 à 8, caractérisé en ce qu'il comporte, sur au moins une de ses faces, outre une strate supplémentaire en contact avec la résine phénolique, une strate de finition non compatible avec les résines phénoliques.

10. matériau stratifié selon la revendication 9, caractérisé en ce que la strate de finition est une couche à base de résine polyester et ne comportant pas de sites hydrophiles en nombre au moins égal au nombre de sites d'insaturation éthylenique de la chaîne polymérique de la résine.

11. Matériau stratifié selon la revendication 9, caractérisé en ce que la strate de finition est une couche à base de résine polyuréthane.

12. Procédé de préparation d'un matériau stratifié selon l'une quelconque des revendications 1 à 8, carac térisé en ce que on applique sur un film support défilant en continu ou on forme sur un moule, de façon à constituer une couche, ladite formulation comprenant une résine de polyester insaturée, on fait durcir au moins partiellement ladite couche, on forme, sur ladite couche, une stratification de résine phénolique et de renfort, on fait durcir la résine phénolique à l'étuve, et on défilme le matériau stratifié obtenu.

13. Procédé selon la revendication 12, caractérisé en ce que on dépose la formulation sur le support à l'aide d'un pistolet, on forme la stratification par contact en déposant la résine phénolique et des renforts de fibres de verre, on chauffe légèrement pour réaliser l'imprégnation des fibres par la résine.

14. Procédé de préparation d'un matériau stratifié selon l'une quelconque des revendications 9 à 11, caractérisé en ce que on dépose sur un film support ou on forme sur un moule une première couche pour former ladite strate de finition, on laisse cette première couche durcir au moins partiellement, on dépose ensuite une seconde couche qui est ladite formulation comprenant une résine de polyester à insaturation éthylénique comportant des sites hydrophiles en nombre au moins égal au nombre de sites d'insaturation éthylénique de la chaîne polymérique de la résine de polyester, on laisse ladite seconde couche durcir au moins partiellement, on forme sur ladite seconde couche une stratification à l'aide de résine phénolique et de renfort, on fait durcir la résine phénolique à l'étuve, et on défilme le matériau stratifié obtenu.

15. Procédé selon l'une des revendications 12 à 14, caractérisé en ce que le durcissement de la résine phénolique se fait aux environs de 95°C.

**Patentansprüche**

1. Schichtstoff auf der Grundlage verstärkten, durch Säurekatalyse vernetzbaren Phenolharzes mit

mindestens 2 Flächen und auf mindestens einer der Flächen einer Zusatzschicht auf der Grundlage eines nichtphenolischen Harzes, dadurch gekennzeichnet, dass die Zusatzschicht im Kontakt mit dem Phenolharz aus einer Formulierung erhalten ist, die ein Polyesterharz mit ethylenischer Ungesättigtheit, ein Lösungsmittel für das genannte Harz und gegebenenfalls ein oder mehrere andere Zusätze umfasst, wobei mindestens einer der Bestandteile der Formulierung hydrophile Stellen in einer Zahl aufweist, die mindestens gleich der Zahl der Stellen ethylenischer Ungesättigtheit des Vorpolymers des Polyesterharzes ist.

2. Schichtstoff nach Anspruch 1, dadurch gekennzeichnet, dass die hydrophilen Stellen der Formulierung, die ein Polyesterharz umfasst, Hydroxyl- oder Carboxylgruppen sind.

3. Schichtstoff nach Anspruch 1 oder 2, dadurch gekennzeichnet, dass die hydrophilen Stellen der Formulierung, die ein Polyesterharz umfasst, von dem Polyesterharz selbst stammen, das dann ein Vorpolymer des Polyesters ist.

4. Schichtstoff nach einem der Ansprüche 1 bis 3, dadurch gekennzeichnet, dass die hydrophilen Stellen der Formulierung, die ein Polyesterharz umfasst, von einem Lösungsmittel des Polyesterharzes stammen.

5. Schichtstoff nach Anspruch 4, dadurch gekennzeichnet, dass das genannte Lösungsmittel des Polyesterharzes Methylmethacrylat ist.

6. Schichtstoff nach Anspruch 3, dadurch gekennzeichnet, dass die hydrophilen Stellen von der Hauptkette mindestens eines der Reaktanten, Polyol oder Disäure, getragen werden, die für die Bildung des Polyesterharzes eingesetzt werden.

7. Schichtstoff nach Anspruch 3, dadurch gekennzeichnet, dass die hydrophilen Stellen von einer Seitenkette mindestens eines der Reaktanten, Polyol oder Disäure, getragen werden, die für die Bildung des Polyesterharzes eingesetzt werden.

8. Schichtstoff nach Anspruch 6, dadurch gekennzeichnet, dass das Polyesterharz ein Vinylesterharz der folgenden Formel ist.

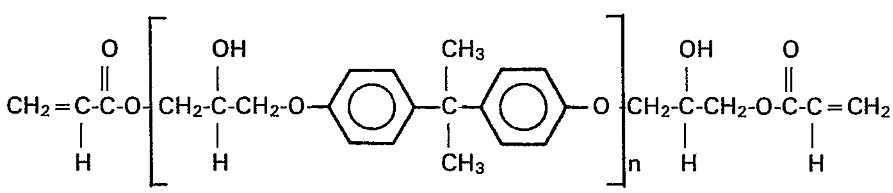

worin n den Wert 1 oder 2 hat.

9. Schichtstoff nach einem der Ansprüche 1 bis 8, dadurch gekennzeichnet, dass er auf mindestens einer seiner Flächen ausser der Zusatzschicht in Kontakt mit dem Phenoharz eine Abschlussschicht aufweist, die mit den Phenolharzen nicht kompatibel ist.

10. Schichtstoff nach Anspruch 9, dadurch gekennzeichnet, dass die Abschlussschicht eine Schicht auf der Grundlage von Polyesterharz ist und keine hydrophilen Stellen in einer Anzahl umfasst, die mindestens gleich der Anzahl der Stellen ethylenischer Ungesättigtheit der polymeren Kette des Harzes ist.

11. Schichtstoff nach Anspruch 9, dadurch gekennzeichnet, dass die Abschlussschicht eine Schicht auf Polyurethanharzgrundlage ist.

12. Verfahren zum Herstellen eines Schichtstoffes nach irgendeinem der Ansprüche 1 bis 8, dadurch gekennzeichnet, dass man auf einen kontinuierlich ablaufenden Filmträger die genannte Formulierung aufbringt oder sie in einer Form unter Bildung einer Schicht herstellt, wobei die genannte Formulierung ein ungesättigtes Polyesterharz umfasst, man die genannte Schicht zumindest teilweise härtet, auf der genannten Schicht eine Schichtung des Phenolharzes und der Verstärkung bildet, das Phenolharz im Trockenschrank härtet und den erhaltenen Schichtstoff abzieht.

13. Verfahren nach Anspruch 12, dadurch gekennzeichnet, dass man die Formulierung mithilfe einer Spritzpistole auf den Träger aufbringt, die Schichtung im Kontakt bildet, indem man das Phenolharz und Glasfaserverstärkungen aufbringt und leicht erhitzt, um die Fasern mit dem Harz zu imprägnieren.

14. Verfahren zur Herstellung eines Schichtstoffes nach irgendeinem der Ansprüche 9 bis 11, dadurch gekennzeichnet, dass man auf einen Filmträger oder einer Form eine erste Schicht aufbringt, um die genannte Abschlussschicht zu bilden, man diese erste Schicht zumindest teilweise härten lässt, eine zweite Schicht aufbringt, die die genannte Formulierung ist, umfassend ein ungesättigtes Polyesterharz mit hydrophilen Stellen in einer Anzahl, die mindestens gleich der Anzahl der ungesättigten Stellen der polymeren Kette des Polyesterharzes ist, man die genannte zweite Schicht mindestens teilweise härtet, auf der genannten zweiten Schicht eine Schichtung aus dem Phenolharz und der Verstärkung bildet, das Phenolharz im Trockenschrank härtet und den erhaltenen Schichtstoff abzieht.

15. Verfahren nach einem der Ansprüche 12 bis 14, dadurch gekennzeichnet, dass die Härtung des Phenolharzes bei etwa 95°C erfolgt.

**Claims**

1. Laminated material based on phenolic resin crosslinkable by acid catalysis and reinforced with a reinforcement, having at least two faces and on at least one of said faces at least one non-phenolic resin-based supplementary layer, characterized in that the supplementary layer in contact with the phenolic resin is obtained from a formulation incorporating an ethylenically unsaturated polyester resin, a solvent for said resin, optionally one or more adjuvants, at least one of the components of the formulation having hydrophilic sites whose number is at least equal

to the number of ethylenic unsaturation sites of the prepolymer of the polyester resin.

2. Laminated material according to claim 1, characterized in that the hydrophilic sites of the formulation incorporating a polyester resin are hydroxyl or carboxyl groups.

3. Laminated material according to claims 1 or 2, characterized in that the hydrophilic sites of the formulation incorporating a polyester resin come from the actual polyester resin, which is then a polyester prepolymer.

4. Laminated material according to any one of the claims 1 to 3, characterized in that the hydrophilic sites of the formulation incorporating a polyester resin come from a solvent of polyester resin.

5. Laminated material according to claim 4, characterized in that said solvent of the polyester resin is methyl methacrylate.

6. Laminated material according to claim 3, characterized in that the hydrophilic sites are carried by the main chain of at least one of the reagents polyol or diacid uded in the formation of the polyester resin.

7. Laminated material according to claim 3, characterized in that the hydrophilic sites are carried by a side chain of at least one of the reagents polyol or diacid used in the formation of the polyester resin.

8. Laminated material according to claim 6, characterized in that the polyester resin is a vinylester resin of formula (1)

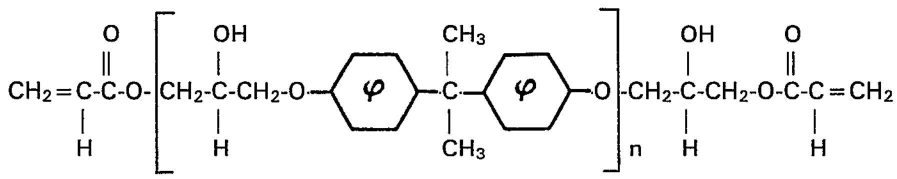

with n = 1 or 2.

9. Laminated material according to one of the claims 1 to 8, characterized in that it has on at least one of its faces, apart from a supplementary layer in contact with the phenolic resin, a top layer not compatible with the phenolic resins.

10. Laminated material according to claim 9, characterized in that the top layer is based on polyester resin and does not have hydrophilic sites whose number is at least equal to the number of ethylenic unsaturation sites of the polymeric chain of the resin.

11. Laminated material according to claim 9, characterized in that the top layer is based on polyurethane resin.

12. Process for the preparation of a laminated material according to any one of the claims 1 to 8, characterized in that to a continuously separating support film is applied or on a mould is shaped, so as to constitute a layer, the said formulation incorporating an unsaturated polyester resin, said layer is at least partly hardened and on said layer is formed a laminate of phenolic resin and reinforcement, the phenolic resin is hardened in the oven and the thus obtained laminated material is defilmed.

13. Process according to claim 12, characterized in that the formulation is deposited on support with the aid of a gun, the laminate is formed by contact through depositing the phenolic resin and glass fibre reinforcements, slight heating takes place in order to bring about the impregnation of the fibres by the resin.

14. Process for the preparation of a laminated material according to any one of the claims 9 to 11, characterized in that on a support film is deposited or on a mould is shaped a first layer in order to form said top layer, said layer being allowed to at least partly harden, this is followed by the deposition of a second layer constituted by the formulation incorporating an unsaturated polyester resin having hydrophilic sites whose number is at least equal to the number of unsaturation sites of the polymeric chain of the polyester resin, said second layer is allowed to at least partly harden, on said second layer is formed a laminate with the aid of phenolic resin and reinforcement, the phenolic resin is hardened in the oven and the laminated material obtained is defilmed.

15. Process according to one of the claims 12 to 14, characterized in that the hardening of the phenolic resin takes place at approximately 95°C.